Europäisches Patentamt

European Patent Office

Office européen des brevets

(19)

(11) **EP 0 639 010 B1**

(12) **FASCICULE DE BREVET EUROPEEN**

(45) Date de publication et mention
de la délivrance du brevet:
**30.12.1998 Bulletin 1998/53**

(51) Int Cl.⁶: **H04B 7/26**, H04B 7/02

(21) Numéro de dépôt: **94401821.7**

(22) Date de dépôt: **05.08.1994**

(54) **Procédé de sélection des trajets de propagation multiples retenus pour la réception des messages dans un système de radio communication AMRC.**

Verfahren zur Auswahl aus mehreren Übertragungswegen auf denen Nachrichten empfangen werden in einer CDMA Funkanordnung

Method for selecting multiple propagation paths on messages received in a CDMA radio communication system

(84) Etats contractants désignés:
**CH DE ES GB IT LI NL SE**

(30) Priorité: **13.08.1993 FR 9309958**

(43) Date de publication de la demande:
**15.02.1995 Bulletin 1995/07**

(73) Titulaire: **MATRA NORTEL COMMUNICATIONS
29000 Quimper (FR)**

(72) Inventeur: **Lucas, Philippe
F-91120 Palaiseau (FR)**

(74) Mandataire: **Loisel, Bertrand et al
Cabinet Plasseraud,
84, rue d'Amsterdam
75440 Paris Cédex 09 (FR)**

(56) Documents cités:
**US-A- 5 233 626**

- **ELECTRONICS LETTERS, vol.29, no.4, 18 Février 1993, STEVENAGE,GB; pages 395 - 396, XP346081 S.S.H.WIJAYASURIYA ET AL 'Rake Decorrelating Receiver for CS-CDMA Mobile Radio Networks'**
- **IEEE INTERNATIONAL CONFERENCE ON COMMUNICATIONS 1993, vol.1, Mai 1993, GENEVA,CH; pages 463 - 467, XP371135 R.ESMAILZADEH 'Pre-rake Diversity Combination for Direct'**
- **IEEE INTERNATIONAL CONFERENCE ON COMMUNICATIONS, vol.2, 1990, ATLANTA,US; pages 453 - 457, XP146108 IHN-KIEL CHANG ET AL 'Performance of Diversity Combining and Coding for DS/DPSK over a Worst Case Pulse Jammed Multipath Fading Channel'**

## Description

La présente invention concerne le domaine des communications radiotéléphoniques à accès multiple à répartition par codes (AMRC ou, en anglais, CDMA pour "Code Division Multiple Access").

L'AMRC est un mode de communication numérique à spectre étalé dans lequel on crée différents canaux de transmission en utilisant, pour chaque canal, des séquences d'étalement modulant les bits d'information à transmettre. Les séquences d'étalement ont une cadence supérieure à celle des bits d'information pour réaliser l'étalement du spectre du signal radio. Leurs propriétés d'auto- et d'intercorrélation sont adaptées pour permettre le multiplexage des différents canaux : ce sont en général des séquences pseudo-aléatoires, orthogonales ou quasi-orthogonales entre elles, prenant les valeurs -1 ou +1.

L'utilisation de l'AMRC dans le domaine de la radiotéléphonie cellulaire est décrite dans le chapitre I de l'ouvrage "Mobile radio communications" de Raymond Steele, Pentech Press, Londres, 1992, ainsi que dans l'article "On the system design aspects of code division multiple access (CDMA) applied to digital cellular and personal communications networks", de A. Salmasi et K.S. Gilhousen, Proc. of the 41st IEEE Vehicular Technology Conference, St Louis, MO, 19-22 mai 1991, et dans le brevet US 5 103 459.

Pour la liaison descendante, les canaux de transmission multiplexés sont formés au niveau de la station de base de chaque cellule du réseau. Chaque station mobile située dans la cellule utilise une séquence d'étalement particulière pour retrouver, dans le signal radio global émis par la station de base, les bits d'information qui lui sont destinés. L'un des canaux AMRC de la liaison descendante est un canal pilote sur lequel la station de base émet une séquence de référence sans modulation de bits d'information. La réception sur le canal pilote permet aux stations mobiles de se synchroniser et d'évaluer la réponse du canal de propagation pour assurer une démodulation cohérente sur les autres canaux.

Pour la liaison montante, chaque station mobile émet un signal radio formé en utilisant une séquence d'étalement particulière. Une corrélation avec cette séquence permet à la station de base de retrouver les bits d'information transmis par la station mobile, parmi les signaux radio reçus de différentes stations mobiles dans la cellule. Il n'y a pas de canal pilote dans le signal émis par une station mobile. La station de base effectue une démodulation non cohérente.

Pour la plupart des systèmes de radiocommunication, les trajets de propagation multiples entre les stations émettrice et réceptrice constituent un problème délicat, en particulier parce qu'ils provoquent des évanouissements du signal (fading de Rayleigh). Un avantage important de l'AMRC est de réduire les inconvénients liés aux trajets multiples, grâce à l'étalement du spectre du signal.

Avec l'AMRC, on peut même profiter de l'existence des trajets multiples pour améliorer les performances de réception, par des techniques de diversité spatiale. On utilise alors un récepteur en râteau (rake receiver), dont chaque bras assure la réception des mêmes signaux suivant un trajet de propagation sélectionné. Chaque trajet est identifié par un retard qu'on applique à la séquence d'étalement pour déterminer une corrélation entre le signal reçu et la séquence retardée. Les corrélations obtenues dans différents bras du récepteur peuvent ensuite être combinées pour restituer les bits d'information transmis.

Cette technique de diversité spatiale est expliquée dans le brevet US 5109390. Dans le système décrit dans ce document, l'un des bras du récepteur en râteau sert à balayer le domaine temporel pour rechercher de nouveaux trajets de propagation. Cette recherche a pour but de sélectionner pour la réception les trajets/ retards pour lesquels l'énergie du signal reçu après corrélation est la plus importante. Les retards sont testés séquentiellement dans une fenêtre temporelle prédéfinie, en déterminant leur énergie associée. Chaque retard testé correspond à un décalage d'un nombre entier d'échantillons ou "chips", de la séquence d'étalement qu'on applique à celle-ci pour le calcul de la corrélation. La fenêtre temporelle des retards testés a typiquement une durée de l'ordre de 100µs, ce qui représente une propagation sur environ 30 km. Une fois qu'un retard a été sélectionné et affecté à un bras du récepteur en râteau, le trajet correspondant est poursuivi au moyen d'une boucle de poursuite, du type boucle de Costas, incluse dans ce bras. Un exemple d'une telle boucle est décrit dans l'article "Theory of Spread-Spectrum Communications- A Tutorial" de R.L. Pickholtz et al., IEEE Trans. on Communications, Vol. COM-30, N°5, mai 1982.

La méthode d'exploration séquentielle des trajets est sûre, mais la demanderesse a observé qu'elle ne tenait pas compte de façon optimale des caractéristiques du canal de propagation. En effet, elle conduit à tester souvent des retards correspondant à des trajets de propagation peu probables. Il en résulte que la sélection d'un "bon" trajet, c'est-à-dire d'un trajet pour lequel ce signal reçu a une énergie satisfaisante, est en moyenne un processus relativement long.

Une autre observation de la demanderesse est que, si on pouvait réduire sensiblement la durée moyenne de sélection d'un "bon" trajet, on pourrait, dans certains cas, se dispenser des boucles de poursuite habituellement nécessaires dans chaque bras du récepteur en râteau. De cette façon, on aurait certes une perte sur le niveau du signal démodulé, car la synchronisation des séquences ne serait plus effectuée avec une résolution plus fine que la durée d'un chip. Mais cette perte ne serait pas supérieure à 3dB, car la dégradation maximale correspondrait à un décalage temporel de la moitié de la durée d'un chip, conduisant à annuler la corrélation instantanée lorsque le signal présente une transition, soit pour un chip sur deux en moyenne, ce qui réduirait d'un facteur 2 la corrélation intégrée. Cette perte limitée à 3dB peut être compensée par le fait qu'un processus de sélection plus rapide permet de sélectionner les meilleurs trajets de façon plus efficace, et éventuellement par d'autres moyens, par exemple en ajoutant un ou plusieurs bras au récepteur en râteau. Dans une optique de simplification des démodulateurs, la suppression des boucles de poursuite serait un avantage important.

Un but de l'invention est de proposer un procédé permettant une sélection plus rapide et efficace des trajets.

L'invention propose dans ce but un procédé de sélection des trajets de propagation multiples retenus pour la réception des messages transmis dans un système de radiocommunication AMRC, chaque trajet étant identifié par un retard qu'on applique à au moins une séquence d'étalement pour déterminer une corrélation entre le signal reçu et ladite séquence d'étalement, dans lequel on évalue, pour chaque retard sélectionné, une énergie de réception contenue dans le signal AMRC constitué par la corrélation entre le signal reçu et une séquence d'étalement de référence, on teste successivement d'autres retards en évaluant l'énergie de réception pour chaque retard testé et, lorsque l'énergie de réception pour un retard testé est supérieure à au moins une des énergies de réception associées aux retards précédemment sélectionnés, on substitue le retard testé à celui des retards précédemment sélectionnés pour lequel l'énergie de réception est la plus faible, caractérisé en ce que les retards testés sont choisis au hasard avec une probabilité de choix qui présente un maximum pour un retard sensiblement égal au plus petit des retards sélectionnés.

Le procédé tire parti du fait qu'en général, plus le retard associé à un trajet est grand, plus la durée de maintien de ce trajet est longue. Il est donc en moyenne plus efficace de rechercher un trajet dont le retard est faible qu'un trajet dont retard est important. C'est pourquoi la probabilité de choix décroît pour les retards supérieurs au plus petit retard sélectionné. Par ailleurs, la probabilité d'existence d'un trajet ayant un retard sensiblement inférieur au plus petit retard sélectionné est en général faible. Par exemple, lorsqu'il existe un trajet direct en ligne droite entre les stations émettrice et réceptrice, ce trajet est normalement sélectionné car son énergie de réception est importante, et la probabilité d'existence d'un trajet plus court est quasiment nulle. Il est donc judicieux de prévoir que la probabilité de choix des retards testés présente un maximum autour du plus petit retard sélectionné.

Lorsque la station mobile se trouve dans une cellule de petites dimensions (zone urbaine), un tirage séquentiel des retards testés dans la longue fenêtre, ou un tirage avec une probabilité de choix uniforme dans la fenêtre, fait perdre beaucoup de temps pour la sélection d'un "bon" trajet. Le maximum de la probabilité de choix permet, selon l'invention, de tester préférentiellement les trajets ayant une probabilité d'existence non négligeable, et donc d'augmenter la rapidité du processus de sélection.

D'autres particularités et avantages de l'invention apparaîtront à la lecture de la description ci-après d'un exemple de réalisation non limitatif, en référence au dessin annexé, dans lequel :

- la figure 1 est un schéma d'un récepteur en râteau permettant de mettre en oeuvre l'invention ; et
- la figure 2 est un graphique illustrant le processus de choix des retards testés.

Dans un système de radiotéléphonie cellulaire, des stations de base sont réparties sur le territoire à couvrir. Dans la zone, ou cellule, couverte par une station de base, plusieurs stations mobiles peuvent communiquer simultanément avec la station de-base. Le procédé selon l'invention est décrit ci-après dans son application aux liaisons descendantes, c'est-à-dire à la transmission des signaux depuis une station de base vers des stations mobiles, pour lesquelles on utilise un accès multiple à répartition par codes (AMRC).

Chaque station de base établit des canaux de transmission AMRC définis chacun par une séquence d'étalement respective CP, C1, ... , Cm. Les séquences d'étalement, qui prennent les valeurs +1 ou -1, sont périodiques, pseudo-aléatoires et pratiquement décorrélées. Elles ont une cadence supérieure à celle des bits d'information à transmettre, par exemple une cadence de 1MHz. Sur chaque canal AMRC de communication vocale, les bits d'information à transmettre, qui représentent des signaux vocaux ou de données préalablement codés par des techniques classiques, sont multipliés par la séquence d'étalement C1, ..., Cm produite par un générateur approprié. Chacune des séquences C1, ..., Cm est caractéristique de l'utilisateur (station mobile) avec lequel la communication s'effectue sur le canal correspondant.

L'un des canaux AMRC formés par la station de base est un canal pilote, sur lequel est émise une séquence d'étalement de référence CP, sans modulation de bits d'information.

Les signaux à spectre étalé en bande de base formés dans les différents canaux AMRC sont combinés puis modulés sur une fréquence porteuse. La combinaison consiste en une sommation, éventuellement pondérée, des signaux en bande de base. La modulation peut être une modulation par déplacement de phase à deux ou à quatre états (MDP-2 ou MDP-4). La fréquence porteuse est par exemple de 2,4 GHz. Le signal radio obtenu après modulation est émis par la station de base à destination des stations mobiles situées dans la cellule.

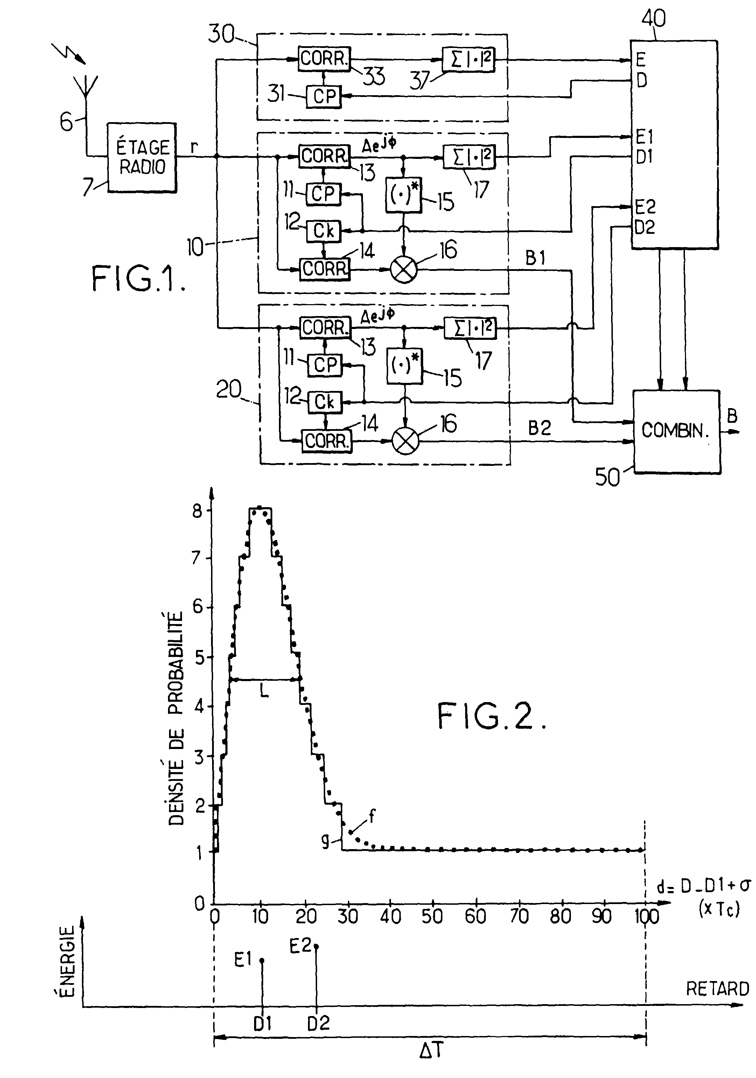

Un récepteur d'une station mobile est représenté sur la figure 1. Le signal radio reçu sur l'antenne 6 est d'abord traité par l'étage radio 7 pour fournir un signal complexe en bande de base r. Le signal complexe r est numérisé en sortie de l'étage radio 7 à une cadence au moins égale à celle des séquences d'étalement. Dans ce signal r sont incluses les composantes AMRC émises par la station de base sur différents canaux AMRC. La station mobile peut retrouver les bits d'informations qui lui sont destinés en calculant les corrélations entre le signal r et la séquence d'étalement Ck qui lui est propre.

Le récepteur de la station mobile est un récepteur en râteau. Dans l'exemple représenté, il comporte trois bras, dont deux bras de réception de données 10, 20 et un bras de recherche de trajets 30. Chaque bras de réception 10, 20 assure la réception du signal suivant un trajet de propagation identifié par un retard D1, D2. Les retards D1, D2 sont affectés aux bras de réception 10, 20 par une unité 40 de gestion du récepteur en râteau.

Chaque bras de réception 10, 20 comporte un générateur pseudo-aléatoire 11 qui délivre la séquence d'étalement de référence CP avec le retard D1, D2 affecté par l'unité de gestion 40, et un générateur pseudo-aléatoire 12 qui délivre la séquence d'étalement Ck de la station mobile avec le même retard D1, D2. Ce retard D1, D2 correspond à la synchronisation des générateurs 11, 12 vis-à-vis d'un trajet de propagation entre la station de base et la station mobile. La séquence synchronisée produite par le générateur 11 est adressée à un corrélateur 13 qui calcule la corrélation entre cette séquence et le signal reçu r. La séquence synchronisée produite par le générateur 12 est adressée à un corrélateur 14 qui calcule la corrélation entre cette séquence et le signal reçu r. Les corrélations sont par exemple calculées sur une durée correspondant à 128 échantillons des séquences d'étalement.

Comme aucun bit d'information n'est modulé sur le canal pilote, le signal AMRC constitué par la sortie complexe du corrélateur 13 représente une estimation $Ae^{j\phi}$, en amplitude et en phase, de la réponse du canal selon le trajet de propagation considéré. Le complexe conjugué de cette estimation $Ae^{j\phi}$ est calculé en 15, puis multiplié en 16 par le signal AMRC constitué par la sortie complexe du corrélateur 14, pour produire une estimation B1, B2 de la valeur du bit transmis, qui constitue la sortie du bras de réception 10, 20. Ainsi, chaque bras de réception du récepteur en râteau assure une démodulation cohérente du signal suivant un trajet.

Chaque bras de réception 10, 20 comporte en outre des moyens, représentés par le bloc 17, pour déterminer une énergie de réception E1, E2 contenue dans le signal AMRC produit par le corrélateur 13. Cette énergie est par exemple obtenue en sommant les modules carrés des estimations $Ae^{j\phi}$ obtenues lors de 10 calculs de corrélations successifs. Les énergies de réception E1, E2 sont adressées à l'unité de gestion 40.

La sommation des estimations B1, B2 est effectuée dans l'unité de combinaison 50 pour fournir l'estimation globale B des bits reçus. L'estimation globale B est fiable et peu sensible au fading de Rayleigh, grâce à la diversité spatiale procurée par le récepteur en râteau.

Dans une réalisation pratique du récepteur, on pourra prévoir davantage de bras de réception de données, par exemple trois ou quatre bras, si on souhaite une plus grande diversité spatiale.

Par ailleurs, comme exposé dans le brevet US-5 109 390, le récepteur en râteau permet de surveiller les signaux émis par plusieurs stations de base, pour assurer une transition en douceur (soft handover) lorsque la station mobile se trouve à proximité de la frontière entre plusieurs cellules. Les stations de base de cellules voisines émettent normalement des séquences différentes (ou la même séquence avec des décalages relatifs importants, ce qui revient au même) sur leur canal pilote. La surveillance simultanée des signaux provenant d'une autre station de base peut donc être effectuée en commandant le générateur 11 d'un des bras de réception pour qu'il produise la séquence de référence attribuée à cette station de base.

A la mise en service de la station mobile, la sélection d'un premier trajet de propagation peut être effectuée de la manière décrite dans la demande de brevet français n° 93 07269. Ensuite, la sélection des trajets est effectuée conformément au procédé selon l'invention.

Le bras de recherche 30 du récepteur en râteau est utilisé pour tester des retards D qui lui sont affectés successivement par l'unité de gestion 40. Le bras de recherche 30 comporte un générateur pseudo-aléatoire 31 qui délivre la séquence d'étalement de référence CP avec le retard D affecté par l'unité 40. La séquence produite par le générateur 31 est adressée à un corrélateur 33 qui calcule la corrélation entre cette séquence et le signal reçu r, de la même manière que les corrélateurs 13 précédemment décrits. Le signal AMRC constitué par la sortie complexe du corrélateur 33 représente une estimation de la réponse du canal selon le trajet testé. Cette estimation est fournie au bloc 37 qui détermine une énergie de réception de la même manière que les blocs 17 précédemment décrits. L'énergie de réception calculée E est adressée à l'unité de gestion 40.

Si l'énergie de réception E déterminée pour le retard testé D est supérieure à au moins une des énergies de réception E1, E2 associées aux retards D1, D2 précédemment sélectionnés, l'unité de gestion 40 substitue ce retard D au retard D1 ou D2 précédemment sélectionné pour lequel l'énergie de réception est la plus faible. Ceci assure que les retards affectés aux bras de réception 10, 20 correspondent aux trajets pour lesquels les conditions de propagation sont les meilleures.

Sur le diagramme inférieur de la figure 2, on a montré, avec des unités arbitraires, un exemple de valeurs d'énergies E1, E2 correspondant à des retards sélectionnés D1, D2. Chaque retard correspond à un nombre entier de fois la durée Tc d'un échantillon des séquences d'étalement. A partir de la valeur du plus petit des retards sélectionnés (D1 dans l'exemple représenté), l'unité 40 définit une fenêtre temporelle dans laquelle pourra être tiré le prochain retard à tester D. La longueur $\Delta T$ de cette fenêtre est typiquement de 100 fois la durée Tc d'un échantillon des séquences d'étalement (soit 100 µs pour une cadence de 1MHz, ce qui représente une propagation sur environ 30 km). Dans cette fenêtre $\Delta T$, le retard D à tester est tiré au hasard avec une probabilité de choix ayant une loi telle que celle représentée sur le diagramme supérieur de la figure 2. La probabilité de choix présente un maximum pour le plus petit retard sélectionné D1.

La loi de densité de probabilité f représentée en pointillés est une loi de Rayleigh surélevée définie par :

$$f(d) = 1 + \alpha.d.\exp(-d^2/2\sigma^2)$$

où d est un nombre entier compris entre 0 et 99 représentant un retard dans la fenêtre $\Delta T$, $\sigma$ est un coefficient déterminant la position du maximum dans la fenêtre ( $\sigma = 10$ dans l'exemple représenté), et $\alpha$ est un coefficient déterminant le rapport entre la probabilité au maximum et la probabilité au minimum. Ce rapport vaut typiquement entre 5 et 15 (8 dans l'exemple représenté, soit $\alpha \approx 11,5/\sigma$ ).

La probabilité de choix des retards testés peut être la loi de Rayleigh surélevée f ou, de façon plus commode pour la mise en oeuvre, une loi g correspondant à une approximation par discrétisation à incréments entiers de la loi f, g(d) étant défini par le nombre entier le plus proche de f(d). Soit N le nombre entier défini par la somme des g(d) pour d allant de 0 à 99 (N≈200 dans l'exemple représenté). Le tirage d'un retard D peut s'effectuer en générant une variable aléatoire uniforme dans l'intervalle [1, N], par exemple au moyen d'un générateur pseudo-aléatoire classique, et en utilisant cette variable comme adresse pour extraire un nombre d d'une table dans laquelle sont mémorisées N valeurs de d, chaque nombre d étant présent g(d) fois dans la table. Le retard D à tester est alors obtenu par l'opération D = d + D1 - $\sigma$ . Cette dernière opération assure en outre le positionnement de la fenêtre $\Delta T$ par rapport au plus petit retard précédemment sélectionné D1.

Dans l'exemple représenté sur la figure 2, on a E1<E2. Si l'énergie de réception E déterminée pour le retard testé D est supérieure à E1, le retard D est substitué au retard D1. Si D<D2, la fenêtre $\Delta T$ sera positionnée avec le maximum de f(d) (d = $\sigma$ = 10) correspondant au nouveau retard D pour le tirage des prochains retards à tester. Si D>D2, la fenêtre sera positionnée avec le maximum de f(d) correspondant au retard D2.

La loi de probabilité retenue f(d) ou g(d) présente un pic autour de la valeur du plus petit retard, dont la largeur à mi-hauteur L est typiquement comprise entre 5 et 20 µs (ici L ≈ 15 x Tc ≈ 15 µs). C'est dans cette plage L qu'a priori les chances sont les plus grandes de trouver un nouveau retard intéressant. Le tirage des retards tient ainsi compte des caractéristiques du canal entre les stations émettrice et réceptrice. Il est également important que la probabilité de choix minimale dans la fenêtre, pour les retards éloignés du pic, ne soit pas nulle. Cette probabilité minimale est de l'ordre de 0,5 % dans l'exemple décrit. Elle ne doit pas être nulle car il peut exister des trajets énergétiques pour des retards sensiblement plus grands que le plus petit retard (typiquement d>30), notamment dans les environnements montagneux et en cas de handover. Mais, en général, ces longs trajets sont moins probables que les trajets plus courts, et ils se maintiennent relativement longtemps, de sorte qu'il n'est pas nécessaire que les retards correspondants soient testés souvent, ce qui justifie la faible valeur de la probabilité pour ces retards.

Avec les paramètres donnés plus haut, le test d'un retard dure environ 1ms, les retards les moins probables (g(d) = 1) sont testés toutes les 200ms environ, et les retards les plus probables (g(d) = 8) sont testés toutes les 25ms environ.

Grâce à l'efficacité de la recherche de trajets effectuée selon le procédé de l'invention, il est envisageable de ne pas prévoir de boucle de poursuite et de synchronisation fine dans les bras de réception 10,20 du récepteur en râteau, ce qui constitue une simplification très avantageuse comme indiqué précédemment.

L'invention a été décrite ci-dessus dans l'application aux liaisons descendantes d'un système radiotéléphonique. Elle peut bien entendu s'appliquer de façon semblable aux liaisons montantes lorsque le récepteur de la station de base comporte un récepteur à diversité (voir US 5109390). Dans ce cas, la séquence de référence utilisée pour le calcul des énergies de réception n'est plus une séquence émise sur un canal pilote, mais la séquence d'étalement servant aux communications.

## Revendications

1. Procédé de sélection des trajets de propagation multiples retenus pour la réception des messages transmis dans un système de radiocommunication à accès multiple à répartition par codes (AMRC), chaque trajet étant identifié par un retard (D1, D2) qu'on applique à au moins une séquence d'étalement pour déterminer une corrélation entre le signal reçu et ladite séquence d'étalement, dans lequel on évalue, pour chaque retard sélectionné (D1, D2), une énergie de réception (E1, E2) contenue dans le signal AMRC constitué par la corrélation entre le signal reçu (r) et une séquence d'étalement de référence (CP), on teste successivement d'autres retards (D) en évaluant l'énergie de réception (E) pour chaque retard testé et, lorsque l'énergie de réception pour un retard testé est supérieure à au moins une des énergies de réception associées aux retards précédemment sélectionnés, on substitue le retard testé à celui des retards précédemment sélectionnés pour lequel l'énergie de réception est la plus faible,

caractérisé en ce que les retards testés (D) sont choisis au hasard avec une probabilité de choix qui présente un maximum pour un retard sensiblement égal au plus petit des retards sélectionnés (D1).

2. Procédé selon la revendication 1, caractérisé en ce que la loi de probabilité de choix des retards testés est approximativement une loi de Rayleigh surélevée.

3. Procédé selon la revendication 1 ou 2, caractérisé en ce que la loi de probabilité de choix des retards testés présente un pic autour de la valeur du plus petit des retards sélectionnés (D1), la largeur temporelle (L) de ce pic étant comprise entre 5 et 20 µs.

4. Procédé selon l'une quelconque des revendications 1 à 3, caractérisé en ce que les retards testés (D) sont choisis au hasard dans une fenêtre temporelle de largeur prédéterminée ($\Delta T$), la position de cette fenêtre étant définie par rapport à la valeur du plus petit des retards sélectionnés (D1).

5. Procédé selon la revendication 4, caractérisé en ce que le rapport entre la probabilité maximale de choix d'un retard dans la fenêtre et la probabilité minimale de choix d'un retard dans la fenêtre est compris entre 5 et 15.

**Patentansprüche**

1. Verfahren zur Auswahl aus mehrfachen Ausbreitungspfaden für den Empfang von Nachrichten, die in einem Radiokommunikationssystem mit Codemultiplex-Vielfachzugriff (CDMA) übertragen werden, wobei jeder Pfad durch eine Verzögerung (D1, D2) identifiziert ist, die auf mindestens eine Spreizsequenz angewendet wird, um eine Korrelation zwischen dem empfangenen Signal und der Spreizsequenz zu bestimmen, bei dem für jede ausgewählte Verzögerung (D1, D2) eine in dem aus der Korrelation zwischen dem empfangenen Signal (r) und einer Bezugs-Spreizsequenz (CP) bestehenden CDMA-Signal enthaltene Empfangsenergie (E1, E2) ausgewertet wird, darauffolgend weitere Verzögerungen (D) mittels Auswertung der Empfangsenergie (E) für jede überprüfte Verzögerung überprüft werden, und, falls die Empfangsenergie für eine überprüfte Verzögerung größer als mindestens eine der den vorausgehend ausgewählten Verzögerungen zugeordneten Empfangsenergien ist, die überprüfte Verzögerung für diejenige der vorausgehend ausgewählten Verzögerungen ersetzt wird, bei der die Empfangsenergie am geringsten ist, dadurch gekennzeichnet, daß die überprüften Verzögerungen (D) nach dem Zufallsprinzip mit einer Auswahlwahrscheinlichkeit ausgewählt werden, die ein Maximum für eine Verzögerung aufweist, welche im wesentlichen gleich der kleinsten der ausgewählten Verzögerungen (D1) ist.

2. Verfahren nach Anspruch 1, dadurch gekennzeichnet, daß das Wahrscheinlichkeitsgesetz der Auswahl der überprüften Verzögerungen annähernd ein Rayleighsches Gesetz höherer Ordnung ist.

3. Verfahren nach Anspruch 1 oder 2, dadurch gekennzeichnet, daß das Wahrscheinlichkeitsgesetz der Auswahl der überprüften Verzögerungen eine Spitze um den Wert der kleinsten der ausgewählten Verzögerungen (D1) aufweist, wobei die zeitliche Breite (L) dieser Spitze zwischen 5 und 20 µs liegt.

4. Verfahren nach einem der Ansprüche 1 bis 3, dadurch gekennzeichnet, daß die überprüften Verzögerungen (D) nach dem Zufallsprinzip in einem Zeitfenster mit einer vorgegebenen Breite ($\Delta T$) ausgewählt werden, wobei die Position dieses Fensters in Bezug auf den Wert der kleinsten der ausgewählten Verzögerungen (D1) definiert wird.

5. Verfahren nach Anspruch 4, dadurch gekennzeichnet, daß das Verhältnis zwischen der maximalen Wahrscheinlichkeit der Auswahl einer Verzögerung in dem Fenster und der minimalen Wahrscheinlichkeit der Auswahl einer Verzögerung in dem Fenster zwischen 5 und 15 liegt.

**Claims**

1. A method for selecting multiple propagation paths retained for receiving messages transmitted in a code-division multiple access (CDMA) radiocommunication system, each path being identified by a delay (D1, D2) which is applied to at least one spreading sequence for determining a correlation between the received signal and said spreading sequence, wherein, for each selected delay (D1, D2), a reception energy (E1, E2) contained in a CDMA signal consisting of a correlation between the received signal (r) and a reference spreading sequence (CP) is estimated, and wherein other delays (D) are successively tested by estimating the reception energy (E) for each tested delay and, when the reception energy for a tested delay is greater than at least one of the reception energies associated with the previously selected delays, said tested delay is substituted for the one of the previously selected delays for which the reception energy is the lowest, characterized in that the tested delays (D) are randomly chosen with a choice probability having a maximum for a delay substantially equal to the smallest of the selected delays (D1).

2. A method according to claim 1, characterized in that the law of the choice probability of the tested delays is approximately an elevated Rayleigh function.

3. A method according to claim 1 or 2, characterized in that the law of the choice probability of the tested delays has a peak about the value of the smallest of the selected delays (D1), the time width (L) of said peak being between 5 and 20 μs.

4. A method according to any one of claims 1 to 3, characterized in that the tested delays (D) are randomly chosen in a time window of predetermined width (ΔT), the position of said window being defined with respect to the value of the smallest of the selected delays (D1).

5. A method according to claim 4, characterized in that the ratio between the maximum probability of choice for a delay in the window and the minimum probability of choice for a delay in the window is between 5 and 15.

EP 0 639 010 B1

FIG.1.

FIG.2.